# EUROPEAN PATENT APPLICATION

(11) **EP 4 350 285 A1**
(43) Date of publication of application: **10.04.2024**
(21) Application number: 21943564.1
(22) Date of filing: 04.06.2021
(51) Int. Cl.: G01C 11/00

(54) **UNMANNED AERIAL VEHICLE MULTISPECTRAL REMOTE SENSING DATA COLLECTION AND PROCESSING INTEGRATED SYSTEM**

(71) Applicant: Yusense Information Technology and Equipment (Qingdao) Inc., Qingdao, Shandong 266000 (CN)
(72) Inventor: LI, Xianfeng, Qingdao, Shandong 266000 (CN); ZHANG, Junqiang, Qingdao, Shandong 266000 (CN); YANG, Bin, Qingdao, Shandong 266000 (CN); ZHANG, Jian, Qingdao, Shandong 266000 (CN); JIANG, Yong, Qingdao, Shandong 266000 (CN); ZHOU, Xueshun, Qingdao, Shandong 266000 (CN); HAO, Yangyang, Qingdao, Shandong 266000 (CN); WANG, Zhenhua, Qingdao, Shandong 266000 (CN)
(74) Representative: Prinz & Partner mbB
(86) International application number: PCT/CN2021/098250
(87) International publication number: WO 2022/252201

(57) **Abstract**

An unmanned aerial vehicle multispectral remote sensing data collection and processing integrated system and method. The system comprises a multispectral camera; an unmanned aerial vehicle, which is connected to the multispectral camera and has an open graph data transmission link; and a DLS and a ground station application, each of which is connected to the unmanned aerial vehicle. The multispectral camera comprises a lens module; an SOC processor platform, which is connected to the lens module by means of an MIPI bridging module; and a serial port communication module, a network transmission module and a storage medium which are respectively connected to an output end of the SOC processor platform. By means of the present application, a hardware architecture of a multispectral camera is optimized, such that the functions of the collection, storage, registration, radiation correction, reflectivity calculation vegetation index calculation, and transmission of spectral image data can be implemented in a routing task of an unmanned aerial vehicle, thereby avoiding the process of copying a large amount of data, reducing the processing pressure of a ground station application end, greatly improving the spectral remote sensing efficiency, and improving the user operation experience; and the present application is suitable for various application scenarios such as unmanned aerial vehicle multispectral remote sensing and detection.

## Description

### FIELD

The present disclosure relates to technical field of multispectral imaging, and in particular to an integrated system for acquiring and processing multispectral remote sensing data of an unmanned aerial vehicle and an operation method for an integrated system for acquiring and processing multispectral remote sensing data of an unmanned aerial vehicle.

### BACKGROUND

A multispectral imaging technology for an unmanned aerial vehicle is widely used in remote sensing applications in various industries such as agriculture, environment, geology, and ecology. In recent years, various types of multispectral imaging devices are emerging. In a typical device for acquiring multispectral data of an unmanned aerial vehicle, the number of spectral channels is normally greater than or equal to four, and the spectral channels generally adopt a filter splitting structure, such as a narrowband filter array, a mosaic filter, and a filter wheel, thereby effectively optimizing the volume and weight, reducing hardware costs, and improving the operating experience.

Currently, a multispectral imaging device is mainly used to drive an image sensor to acquire images, meeting the requirements for an overlap rate and regularly triggering photographing. During aerial photographing, the multispectral imaging device acquires images of ground objects, and stores original images, in a TIFF format and with geographic coordinate labels, in a storage medium. After the multispectral imaging device returns to the ground with the unmanned aerial vehicle, data is copied to a computer installed with remote sensing imaging software for preprocessing and analysis. The above process is time-consuming and has poor timeliness and low efficiency, and the user cannot view multispectral images while the unmanned aerial vehicle performs a flight mission.

As a simple device for acquiring data, the above type of multispectral imaging device has weak interaction with the unmanned aerial vehicle and low intelligence, not changing the current industry situation of "relying on copying to achieve large amounts of data and cumbersome radiation correction" of multispectral remote sensing for the unmanned aerial vehicle.

### SUMMARY

In view of this, an integrated system for acquiring and processing multispectral remote sensing data of an unmanned aerial vehicle and an operation method for an integrated system for acquiring and processing multispectral remote sensing data of an unmanned aerial vehicle are provided according to the present disclosure to overcome or at least partially solve the above problems.

An integrated system for acquiring and processing multispectral remote sensing data on an unmanned aerial vehicle is provided. The integrated system includes: a multispectral camera, an unmanned aerial vehicle, a DLS, and a ground station APP. The unmanned aerial vehicle is connected to the multispectral camera, and is arranged with an open image transmission link and an open data transmission link. The DLS and the ground station APP are connected to the unmanned aerial vehicle. The multispectral camera includes a lens module, an SOC processor platform, a serial communication module, a network transmission module and a storage medium. The SOC processor platform is connected to the lens module through an MIPI bridging module. Each of the serial communication module, the network transmission module and the storage medium is connected to an output terminal of the SOC processor platform. The lens module is configured to receive a reflected light from a ground object to acquire image data from multiple channels. The MIPI bridging module is configured to convert an image output interface to an MIPI-CSI interface. The SOC processor platform is configured to acquire image data, and perform registration, radiometric correction, reflectance calculation and vegetation index calculation on the image data by using an on-chip heterogeneous multicore architecture. The DLS is configured to receive a measured spectral irradiance of an ambient light, and transmit the measured spectral irradiance to the SOC processor platform through the data transmission link of the unmanned aerial vehicle for correcting the ambient light in real time. The serial communication module is configured to transmit a configuration instruction from the ground station APP for switching an operation mode and a parameter of the lens module, and perform data interaction with the DLS to obtain an image and load POS position and posture information. The network transmission module is configured to transmit a compressed video, a reflectance image, and the POS position and posture information to the ground station APP through the image transmission link of the unmanned aerial vehicle based on a UDP protocol. The storage medium is configured to store the image data from the multiple channels. The ground station APP is configured to control the unmanned aerial vehicle and the multispectral camera to operate, switch display of a multispectral index video, and perform offline local splicing and online backup to a cloud.

In an embodiment, in the integrated system for acquiring and processing multispectral remote sensing data of an unmanned aerial vehicle according to the embodiment of the present disclosure, the lens module includes a multispectral lens module, a thermal infrared lens module, and an RGB lens module. The multispectral lens module includes an optical lens with low distortion, a built-in narrowband filter for a band, and a panchromatic image sensor. The thermal infrared lens module includes an optical lens with low distortion, a built-in narrowband filter for a band, and a thermal infrared image sensor. The RGB lens module includes an optical lens with low distortion, a built-in narrowband filter for a band, and an RGB image sensor.

In an embodiment, in the integrated system for acquiring and processing multispectral remote sensing data of an unmanned aerial vehicle according to the embodiment of the present disclosure, the MIPI bridging module includes a power supply conversion circuit and a bridging chip. The SOC processor platform is further configured to identify an ID number of the lens module, automatically load a firmware corresponding to the bridging chip to the MIPI bridging module, and enable a power supply rail of an image sensor corresponding to the MIPI bridging module.

In an embodiment, in the integrated system for acquiring and processing multispectral remote sensing data of an unmanned aerial vehicle according to the embodiment of the present disclosure, the SOC processor platform includes: a GPU core, a DSP core, an ARM core, and an M7 core. The GPU core is configured to perform registration on the image data in real time to register image spaces of spectral channels to a same benchmark. The DSP core is configured to perform radiometric correction on the image data, compare the image data after radiometric correction with a standard reflectance pre-stored in a memory, convert the image data to a spectral radiance, and perform reflectance calculation to convert the spectral radiance to a ground reflectance, and then transmit the ground reflectance to a next level and perform on-chip vegetation index calculation. The ARM core is configured to encode, compress, transmit and store the multispectral index video. The M7 core is configured to perform external triggering, state displaying, and IMU posture calculation.

In an embodiment, in the integrated system for acquiring and processing multispectral remote sensing data of an unmanned aerial vehicle according to the embodiment of the present disclosure, the SOC processor platform is configured to trigger the multiple channels synchronously based on a frame synchronization signal in a slave mode.

In an embodiment, in the integrated system for acquiring and processing multispectral remote sensing data of an unmanned aerial vehicle according to the embodiment of the present disclosure, the network transmission module includes a network transmission video module and a network transmission data module. The network transmission video module is configured to transmit, based on the UDP protocol and via a 100-Mbps network port, a compressed video obtained by performing index calculation through the image transmission link of the unmanned aerial vehicle. The network transmission data module is configured to transmit, based on the UDP protocol and via the 100-Mbps network port, compressed multispectral reflectance image data and the POS position and posture information through the image transmission link of the unmanned aerial vehicle.

In an embodiment, in the integrated system for acquiring and processing multispectral remote sensing data of an unmanned aerial vehicle according to the embodiment of the present disclosure, the ground station APP is configured to: in a case that the ground station APP operates in an offline state without a mobile network, solve the POS position and posture information, perform local splicing and index calculation on the reflectance image, and generate multiple image layers; and in a case that the ground station APP operates an online state with a mobile network, upload a local cached reflectance image and the POS position and posture information to a cloud server for data backup.

An operation method for the integrated system for acquiring and processing multispectral remote sensing data of an unmanned aerial vehicle is provided according to an embodiment of the present disclosure. The method includes: receiving, by the lens module, a reflected light from a ground object to acquire image data from multiple channels; converting, by the MIPI bridging module, an image output interface to an MIPI-CSI interface; acquiring, by the SOC processor, image data, and performing, by the SOC processor, registration, radiometric correction, reflectance calculation and vegetation index calculation on the image data by using an on-chip heterogeneous multicore architecture; receiving, by the DLS, a measured spectral irradiance of an ambient light, and transmitting, by the DLS, the measured spectral irradiance to the SOC processor platform through the data transmission link of the unmanned aerial vehicle for correcting the ambient light in real time; transmitting, by the serial communication module, a configuration instruction from the ground station APP to switch an operation mode and a parameter of the lens module, and performing, by the serial communication module, data interaction with the DLS to obtain an image and load POS position and posture information; transmitting, by the network transmission module, a compressed video, a reflectance image, and the POS position and posture information to the ground station APP through the image transmission link of the unmanned aerial vehicle based on a UDP protocol; storing, by the storage medium, the image data from the multiple channels; and controlling, by the ground station APP, the unmanned aerial vehicle and the multispectral camera to operate, switching, by the ground station APP, display of a multispectral index video, and performing, by the ground station APP, offline local splicing and online backup to a cloud.

From the above technical solutions, it can be seen that an integrated system for acquiring and processing multispectral remote sensing data of an unmanned aerial vehicle is provided according to the present disclosure. The integrated system includes: a multispectral camera, an unmanned aerial vehicle, a DLS, and a ground station APP. The unmanned aerial vehicle is connected to the multispectral camera, and is arranged with an open image transmission link and an open data transmission link. The DLS and the ground station APP are connected to the unmanned aerial vehicle. The multispectral camera includes a lens module, an SOC processor platform, a serial communication module, a network transmission module and a storage medium. The SOC processor platform is connected to the lens module through an MIPI bridging module. Each of the serial communication module, the network transmission module and the storage medium is connected to an output terminal of the SOC processor platform. The lens module is configured to receive a reflected light from a ground object to acquire image data from multiple channels. The MIPI bridging module is configured to convert an image output interface to an MIPI-CSI interface. The SOC processor platform is configured to acquire image data, and perform registration, radiometric correction, reflectance calculation and vegetation index calculation on the image data by using an on-chip heterogeneous multicore architecture. The DLS is configured to receive a measured spectral irradiance of an ambient light, and transmit the measured spectral irradiance to the SOC processor platform through the data transmission link of the unmanned aerial vehicle for correcting the ambient light in real time. The serial communication module is configured to transmit a configuration instruction from the ground station APP for switching an operation mode and a parameter of the lens module, and perform data interaction with the DLS to obtain an image and load POS position and posture information. The network transmission module is configured to transmit a compressed video, a reflectance image, and the POS position and posture information to the ground station APP through the image transmission link of the unmanned aerial vehicle based on a UDP protocol. The storage medium is configured to store the image data from the multiple channels. The ground station APP is configured to control the unmanned aerial vehicle and the multispectral camera to operate, switch display of a multispectral index video, and perform offline local splicing and online backup to a cloud.

According to the present disclosure, the hardware architecture of the multispectral camera is optimized, and a heterogeneous multi-core SOC processor platform is adopted, thereby collecting and processing spectral data in an integrated and online manner. Thus, acquisition, storage, registration, radiometric correction, reflectance calculation, vegetation index calculation, and transmission may be performed on the spectral image data in a flight mission of the unmanned aerial vehicle, avoiding copying a large amount of offline data, reducing the processing pressure of the ground station APP, realizing viewing a process video in real time, greatly improving the spectral remote sensing efficiency, and improving the user's operation experience. The present disclosure is suitable for various application scenarios such as multispectral remote sensing and detection of unmanned aerial vehicles. In addition, the operation method for the integrated system for acquiring and processing multispectral remote sensing data of an unmanned aerial vehicle is further provided according to the present disclosure, further improving the practicability of the integrated system. The method has the advantages of the integrated system.

The above description is only an overview of the technical solutions of the present disclosure. Embodiments of the present disclosure are described hereinafter in order to understand the technical means of the present disclosure more clearly, so as to implement the technical solutions based on the content in the specification, and further to make the above and other objectives, features and advantages of the present disclosure more apparent and understandable.

### BRIEF DESCRIPTION OF THE DRAWINGS

By reading the detailed description of preferred embodiments below, various other advantages and benefits are clear to those skilled in the art. The drawings are used only for showing the preferred embodiments and are not intended to limit the present disclosure. In the drawings, same reference numerals represent identical components. In the drawings:
Figure 1 is a schematic structural diagram of an integrated system for acquiring and processing multispectral remote sensing data of an unmanned aerial vehicle according to an embodiment of the present disclosure;
Figure 2 is a schematic diagram of a spectral transmittance corresponding to a multispectral camera according to an embodiment of the present disclosure;
Figure 3 is a schematic structural diagram of a multispectral camera according to an embodiment of the present disclosure;
Figure 4 is a schematic structural diagram of an SOC processor platform according to an embodiment of the present disclosure;
Figure 5 is a schematic diagram of a route planning interface according to an embodiment of the present disclosure;
Figure 6 is a schematic diagram of a route task interface according to an embodiment of the present disclosure;
Figure 7 is a schematic diagram showing functions between a camera side, an unmanned aerial vehicle, a ground station and a cloud server according to an embodiment of the present disclosure; and
Figure 8 is a flow chart of an operation method for an integrated system for acquiring and processing multispectral remote sensing data of an unmanned aerial vehicle according to an embodiment of the present disclosure.

### DETAILED DESCRIPTION

Technical solutions of embodiments of the present disclosure are clearly and completely described hereinafter in conjunction with the drawings of the embodiments of the present disclosure. Apparently, the embodiments described in the following are only some embodiments of the present disclosure, rather than all embodiments. Based on the embodiments in the present disclosure, all of the other embodiments which are obtained by those skilled in the art without any creative work fall within the protection scope of the present disclosure.

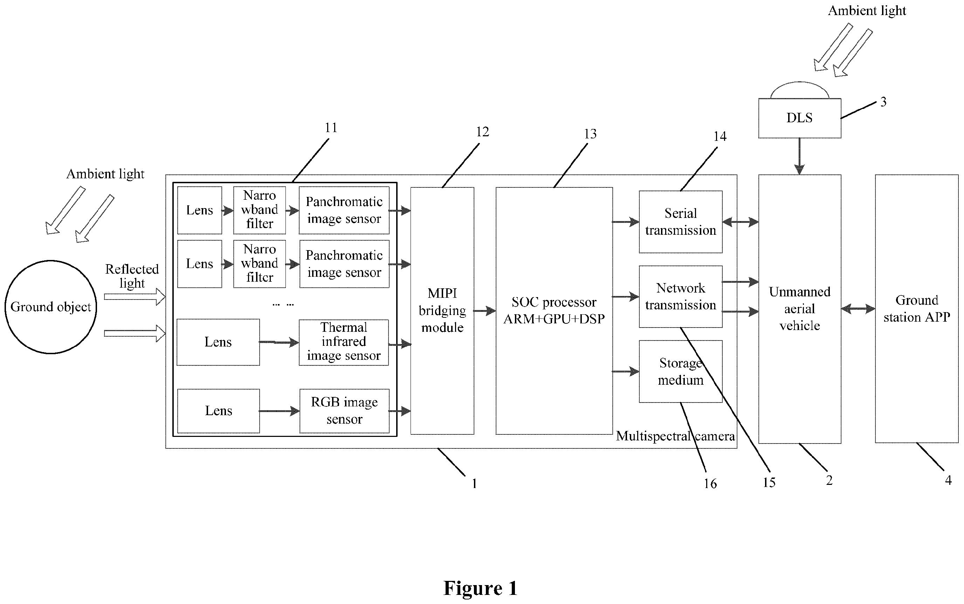

An integrated system for acquiring and processing multispectral remote sensing data of an unmanned aerial vehicle is provided according to the present disclosure. As shown in Figure 1, the integrated system includes: a multispectral camera 1, an unmanned aerial vehicle 2, a DLS (downwelling light sensor) 3, and a ground station APP. The unmanned aerial vehicle 2 is connected to the multispectral camera 1 and is arranged with an open image transmission link and an open data transmission link. The DLS 3 and the ground station APP 4 are connected to the unmanned aerial vehicle 2. The multispectral camera 1 includes a lens module 11, an SOC processor platform 13, a serial communication module 14, a network transmission module 15 and a storage medium 16. The SOC processor platform is connected to the lens module11 through an MIPI (mobile industry processor interface) bridging module 12. Each of the serial communication module 14, the network transmission module 15 and the storage medium 16 is connected to an output terminal of the SOC processor platform 13.

The lens module 11 is configured to receive a reflected light from a ground object to acquire image data from multiple channels. Specifically, an image sensor of the lens module 11 receives spectral energy information of each band, then the spectral energy information is converted to a digital DN value, and then the digital DN value is outputted.

The MIPI bridging module 12 is configured to convert an image output interface to an MIPI-CSI interface. Specifically, to flexibly expand image sensors with different resolutions, the MIPI bridging module 12 may convert various high-speed image interfaces to a 2lane standard MIPI-CSI, so that the SOC processor platform may acquire images from multiple channels.

The SOC processor platform 13 is configured to acquire image data, and perform registration, radiometric correction, reflectance calculation and vegetation index calculation on the image data by using an on-chip heterogeneous multi-core architecture. Specifically, the SOC processor platform 13 is a development platform based on HiSilicon's Hi3559AV100 or Hi3559CV100 series, and includes a memory, a DC/DC power supply, an interface circuit and the like. The SOC processor platform 13 may acquire 8*2lane images, perform ISP processing, and collect image data from up to 8 channels. The on-chip heterogeneous multi-core architecture may acquire and preprocess a multispectral image, perform multi-task deployment and scheduling, maximize hardware resources to process the multispectral image with, backup and store raw images, and return a compressed reflectance image and an index video in real time.

The DLS 3 includes a spectral sensor, and is configured to receive a measured spectral irradiance of an ambient light and transmit the measured spectral irradiance to the SOC processor platform 13 through the data transmission link of the unmanned aerial vehicle 2 for correcting the ambient light in real time.

The serial communication module 14 is configured to transmit a configuration instruction from the ground station APP 4 for switching an operation mode and a parameter of the lens module 11. The serial communication module 14 is further configured to perform data interaction with the DLS 3, and share coordinates and posture information of the unmanned aerial vehicle to obtain an image and load POS position and posture information.

The network transmission module 15 is configured to transmit a compressed video, a reflectance image, and the POS position and posture information to the ground station APP 4 through the image transmission link of the unmanned aerial vehicle based on a UDP protocol.

The storage medium 16 is configured to store the image data from the multiple channels. Specifically, the storage medium may be a high-speed U disk, SSD, or the like, all of which may rapidly store the image data from the multiple channels.

The ground station APP 4 is configured to control the unmanned aerial vehicle 2 and the multispectral camera 1 to operate, switch display of a multispectral index video, and perform offline local splicing and online backup to a cloud. Specifically, as a control terminal for the unmanned aerial vehicle and the multispectral imaging device, the ground station APP 4 may display a state of the camera and an outputted video in real time for visual interpretation. The ground station APP 4 may perform local rapid splicing, may perform splicing, index calculation, and publishing based on received multispectral reflectance data, posture information, and the like, and may perform cloud backup.

It should be noted that the multispectral camera 1 may acquire and preprocess images from multiple channels synchronously, assist a sensor to acquire information, compress an image, and compress, encode, transmit and store a video. The unmanned aerial vehicle 2 is an unmanned aerial vehicle arranged with an open image transmission link and an open data transmission link, such as DJI's M200/M210 series and M300RTK with a PSDK open link, an OSDK open link, an MSDK open link, or the like.

In the integrated system for acquiring and processing multispectral remote sensing data of an unmanned aerial vehicle according to the embodiments of the present disclosure, the hardware architecture of the multispectral camera is optimized, and a heterogeneous multi-core SOC processor platform is adopted, thereby collecting and processing spectral data in an integrated and online manner. Thus, acquisition, storage, registration, radiometric correction, reflectance calculation, vegetation index calculation, and transmission may be performed on the spectral image data in a flight mission of the unmanned aerial vehicle, avoiding copying a large amount of offline data, reducing the processing pressure of the ground station APP, realizing viewing a process video in real time, greatly improving the spectral remote sensing efficiency, and improving the user's operation experience. The integrated system for acquiring and processing multispectral remote sensing data of an unmanned aerial vehicle according to the embodiments of the present disclosure is suitable for various application scenarios such as multispectral remote sensing and detection of unmanned aerial vehicles.

Furthermore, in an embodiment, in the integrated system for acquiring and processing multispectral remote sensing data of an unmanned aerial vehicle according to the embodiments of the present disclosure, the lens module 11 includes a multispectral lens module, a thermal infrared lens module, and an RGB lens module. As shown in Figure 1, the multispectral lens module includes an optical lens with low distortion, a built-in narrowband filter for a band, and a panchromatic image sensor. The thermal infrared lens module includes an optical lens with low distortion, a built-in narrowband filter for a band, and a thermal infrared image sensor. The RGB lens module includes an optical lens with low distortion, a built-in narrowband filter for a band, and an RGB image sensor.

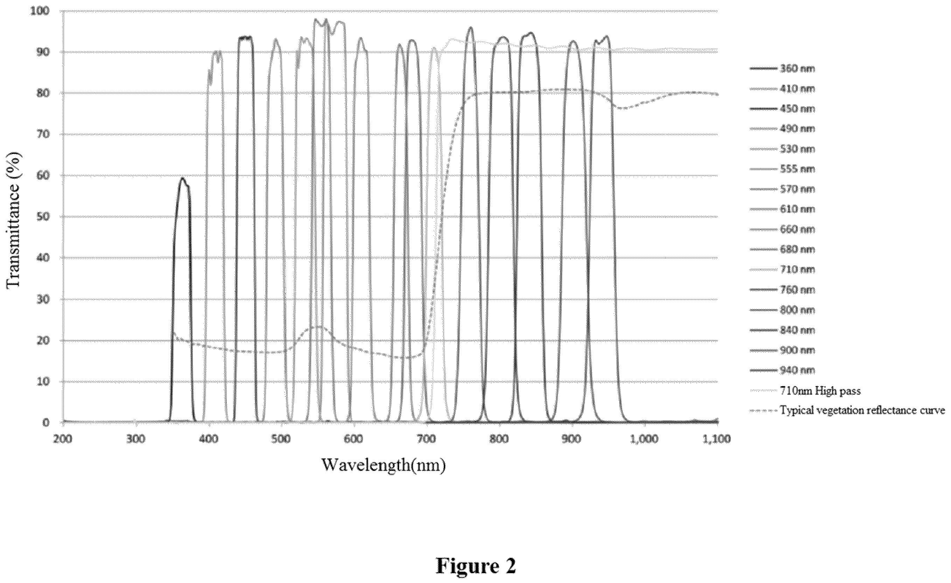

It should be noted that in the present disclosure in addition to receiving multispectral image data, a thermal infrared data stream and an RGB data stream may further be received and processed simultaneously, and various optoelectronic parameter targets may be supported by replacing the lens module. In the present disclosure, independent lens modules are used, so that more center wavelengths and spectral bandwidths may be selected, providing more possibilities for subsequent index inversion calculation. Figure 2 shows a spectral transmittance corresponding to a multispectral lens module. Multiple spectral channels, RGB channels or thermal infrared channels with different specifications may be connected to the same SOC processor platform by using the MIPI bridging module. Compared with the conventional multispectral camera array device, the integrated system according to the present disclosure has lower power consumption, a smaller volume, more flexibility and scalability.

Furthermore, in an embodiment, in the integrated system for acquiring and processing multispectral remote sensing data of an unmanned aerial vehicle according to the embodiments of the present disclosure, the MIPI bridging module 12 includes a power supply converter and a bridging chip. The SOC processor platform 13 is further configured to identify an ID number of the lens module 11, automatically load a firmware corresponding to the bridging chip to the MIPI bridging module 12, and enable a power supply rail of an image sensor corresponding to the MIPI bridging module 12.

Specifically, in initializing the integrated system on power, the SOC processor platform identifies the ID of the lens module, loads the relevant firmware corresponding to the bridging chip to the MIPI bridge module, and enables the power supply rail matching the image sensor corresponding to the lens module. The SOC processor platform configures the image sensor corresponding to the lens module through an I2C bus. The image sensor operates normally, and the image data is inputted to the SOC processor platform through the MIPI bridging module.

In the present disclosure, EEPROMs are configured on different types of lens modules to store different type information, and the SOC processor platform reads the type information. Once a front-end lens module is replaced, in order to adapt to an image output interface of the image sensor, the processor may load the firmware set on a memory (eMMC) in factory to a FLASH of the MIPI bridging module and enable an power supply rail LDO of the image sensor corresponding to the MIPI bridging module, ensuring the normal operation of the link interface and functions.

Therefore, according to the present disclosure, a single SOC processor platform is connected to lens modules having multi-channel narrowband filters with different resolutions and different image interfaces, and the ingle SOC processor platform may be arranged with an uncooled thermal infrared and color image sensor channel, achieving high flexibility and a compact volume, meeting the requirements of different ground resolutions and even multi-source remote sensing data fusion, and especially suitable for an application in the unmanned aerial vehicle.

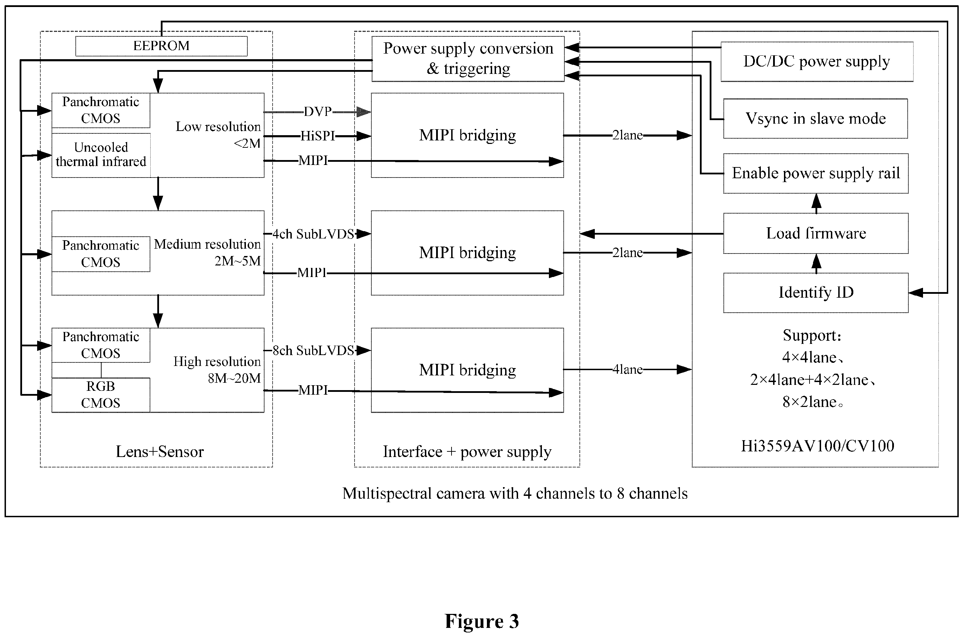

As shown in Figure 3, the eMMC on a mainboard stores firmware for MIPI bridging modules with different specifications. The ID of the front-end lens module is identified, and then a firmware may be automatically loaded to the bridging chip, adapting to image sensors with different resolutions and different input interface rates, and supporting connecting to a hybrid sensor (such as an RGB CMOS image sensor and a uncooled thermal infrared sensor). The SOC processor platform 13 may trigger the multiple channels synchronously based on a frame synchronization (Vsync) signal in a slave mode. In addition, the bridging converter includes an LDO (such as 1.2V, 1.5V, 1.8V, or 2.5V) meeting requirements for typical power rails of image sensors. The SOC processor platform reads and identifies a ID number stored in the EEPROM of the front-end lens module, and then a corresponding power supply rail is enabled. For meeting the main requirements of the multispectral remote sensing for the unmanned aerial vehicle, the lens module includes: 17 typical narrowband filters ranging from 400nm to 1000nm, an optical lens with low distortion and a focal length ranging from 5mm to 12mm, sensors such as a panchromatic CMOS image sensor with a low resolution (less than 2Mpx) and an uncooled thermal infrared sensor, typical interfaces such as a parallel port (DVP), an HiSPI interface or an MIPI interface, a panchromatic CMOS image sensor with a medium resolution (ranging from 2Mpx to 5Mpx), typical interfaces such as a SubLVDS interface and the MIPI interface, an RGB CMOS image sensor with a high resolution (ranging from 8Mpx to 20Mpx) and a panchromatic image sensor, and typical interfaces such as the SubLVDS interface and the MIPI interface. At the processor side, multiple combinations of MIPIs, such as 4*4lane, 2*4lane+4*2lane, and 8*2lane, are supported.

It should be noted that image output interfaces of different types of image sensors may be converted to the MIPI interface of the SOC processor platform through the MIPI bridging module based on a shared backend processing platform according to the present disclosure. By combining different front-end lens modules, the requirements of multispectral imaging with different numbers of channels (ranging from 4 channels to 8 channels), different resolutions and different focal lengths may be met. Further, different types of image sensors such as the RGB image sensor and the thermal infrared image sensor may be arranged to acquire multi-source image data in a single frame, so that the integrated system has good scalability and flexibility.

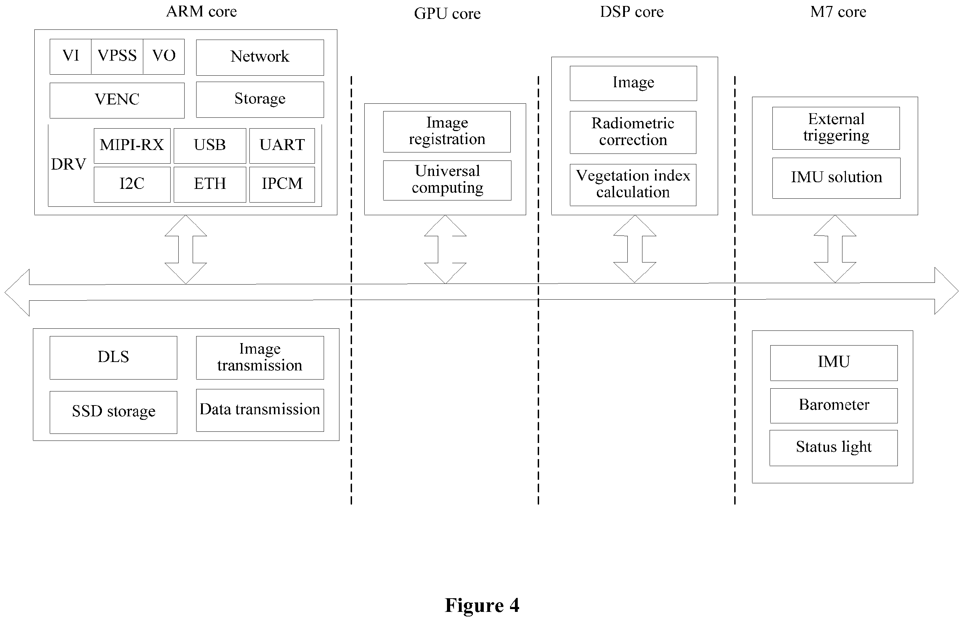

Furthermore, in an embodiment, in the integrated system for acquiring and processing multispectral remote sensing data of an unmanned aerial vehicle according to the embodiments of the present disclosure, as shown in Figure 4, the SOC processor platform 13 may include a GPU core, a DSP core, an ARM core and an M7 core. The GPU core is configured to perform registration on the image data in real time to register image spaces of spectral channels to a same benchmark. The DSP core is configured to perform radiometric correction on the image data, compare the image data after radiometric correction with a standard reflectance pre-stored in a memory, convert the image data to a spectral radiance, and perform reflectance calculation to convert the spectral radiance to a ground reflectance, and then transmit the ground reflectance to a next level and perform on-chip vegetation index calculation. The ARM core is configured to encode, compress, transmit and store the multispectral index video. The M7 core is configured to perform external triggering, state displaying, and IMU posture calculation. It should be noted that the SOC processor platform 13 may perform multi-core multi-task deployment, performing strict time synchronization and posture sensor calculation by using the M7 core. The SOC processor platform 13 may perform online reflectance inversion by using the DSP core, and perform radiometric correction on raw DN value data of received complete frames of the multiple channels to realize true reflectance processing. The SOC processor platform 13 may perform registration calculation by using the GPU core, perform online object detection with an NNIE engine, and compress a vegetation index video by using an integrated video encoding module.

It should be understood that based on the SOC processor platform, the cores communicate with each other, fully deploying is performed on the cores, and resources are reasonably allocated, so that images are processed. As shown in Figure 4, images of the multiple spectral channels are extracted from a VI module and then are transferred to the GPU core. The images are registered based on a flight altitude, a posture, and other information obtained from the multispectral imaging device according to the OpenCL technology. The registered images are transmitted to the DSP core for radiometric correction, are compared with a standard reflectance pre-stored in a memory, then are converted to reflectance image data, and then are transmitted to a next level and are used for on-chip vegetation index calculation. The multi-core ARM performs functions such as encoding, compression, video/data transmission, and storage. The M7 core performs external triggering, state displaying, IMU calculation and other processes with a high real-time requirement.

According to the present disclosure, after the radiometric correction and reflectance calculation are performed on the raw DN value data, the data is further compressed, achieving a low accuracy loss without affecting subsequent inversion. In addition, after the raw DN value data is converted to the index video, the amount of data is significantly reduced, meeting the downlink bandwidth requirements of the image transmission link and the data transmission link, so that the index video may be displayed in real time and spliced online on a software end of the ground station. After the registration and radiometric correction are performed on the images transmitted by the multispectral camera on the unmanned aerial vehicle, the processing pressure for the software at the ground station is significantly reduced, so that the user may have a smooth and intuitive interaction process. In the above way, a multispectral vegetation index video, an RGB video or a thermal infrared video may be pushed in real time, the compressed multispectral reflectance image and the POS position and posture information may be online transmitted, which may be performed with or without a mobile network. In a case that the integrated system is connected to a network, local cached image data may be backed up to a cloud or may be processed with a deep algorithm, avoiding a process of copying data and improving the efficiency of multispectral remote sensing operation on the unmanned aerial vehicle.

In an embodiment, in the integrated system for acquiring and processing multispectral remote sensing data of an unmanned aerial vehicle according to the embodiments of the present disclosure, the network transmission module 15 may include a network transmission video module and a network transmission data module. The network transmission video module is configured to transmit, based on the UDP protocol and via a 100 Mbps network port, a compressed video (that is, a H.264 compressed video such as an index pseudo-color video and an RGB video) obtained by performing index calculation by the SOC processor platform 13 through the image transmission link of the unmanned aerial vehicle. The network transmission data module is configured to transmit, based on the UDP protocol and via the 100 Mbps network port, compressed multispectral reflectance image data and the POS position and posture information that are obtained by performing processing by the SOC processor platform 13 through the image transmission link of the unmanned aerial vehicle.

Specifically, the reflected light from the ground object is received by the lens module. The image sensor receives the spectral energy information of each of bands, and converts the spectral energy information to the digital DN value and outputs the digital DN value. The MIPI bridging module transmits the DN value data from the image sensor to the SOC processor platform via the 2lane MIPI-CSI. The SOC processor platform performs ISP processing and performs automatic exposure on the images of the multiple spectral channels. The DLS receives the measured spectral irradiance of the ambient light, and transmits the spectral irradiance to the SOC processor platform through the data transmission link of the unmanned aerial vehicle. The SOC processor platform performs on-chip registration in real time by using hardware resources of the heterogeneous multi-core architecture to register image spaces of the spectral channels to a same benchmark; performs radiometric correction and converts the digital DN value of the image to a spectral radiance; performs reflectance calculation and convert the spectral radiance to a ground reflectance; and corrects the ambient light and introduces a spectral irradiance change detected by the DLS to the calculation. After index calculation is performed on the reflectance image, H.264 compression encoding is performed on the reflectance image, and then the reflectance image is transmitted in a video format based on a network port UDP protocol through the image transmission link of the unmanned aerial vehicle to the ground station APP for real-time display. JPEG format compression is performed on the reflectance image and the position and posture information, then the compressed reflectance image and position and posture information and transmitted in a data format based on the network port UDP protocol to the ground station APP through the image transmission link of the unmanned aerial vehicle. The ground station APP may select the type of the vegetation index, perform local rapid splicing and output a result image. In a case that the integrated system is connected to a mobile network, the reflectance image data and the position and posture information may be backed up and uploaded to a cloud. In this way, the multispectral camera compresses and transmits reflectance image data and POS position and posture information, and compresses and transmits a video (such as the RGB video or the thermal infrared video) on an expansion channel or the index video, fully utilizing the bandwidth of the image transmission link of the unmanned aerial vehicle for downlink push, reducing the processing pressure of the ground station APP. Thus, the process video may be intuitively viewed, and various types of index calculation and local splicing and publishing of related videos may be efficiently performed, ensuring online and real-time performance of multispectral remote sensing of the unmanned aerial vehicle.

In an embodiment, in the integrated system for acquiring and processing multispectral remote sensing data of an unmanned aerial vehicle according to the embodiments of the present disclosure, the ground station APP 4 is configured to: in a case that the ground station APP 4 operates in an offline state without a mobile network, solve the POS position and posture information, perform local splicing and index calculation on the reflectance image, and generate multiple image layers; and in a case that the ground station APP 4 operates an online state with a mobile network, upload a local cached reflectance image and the POS position and posture information to a cloud server for data backup.

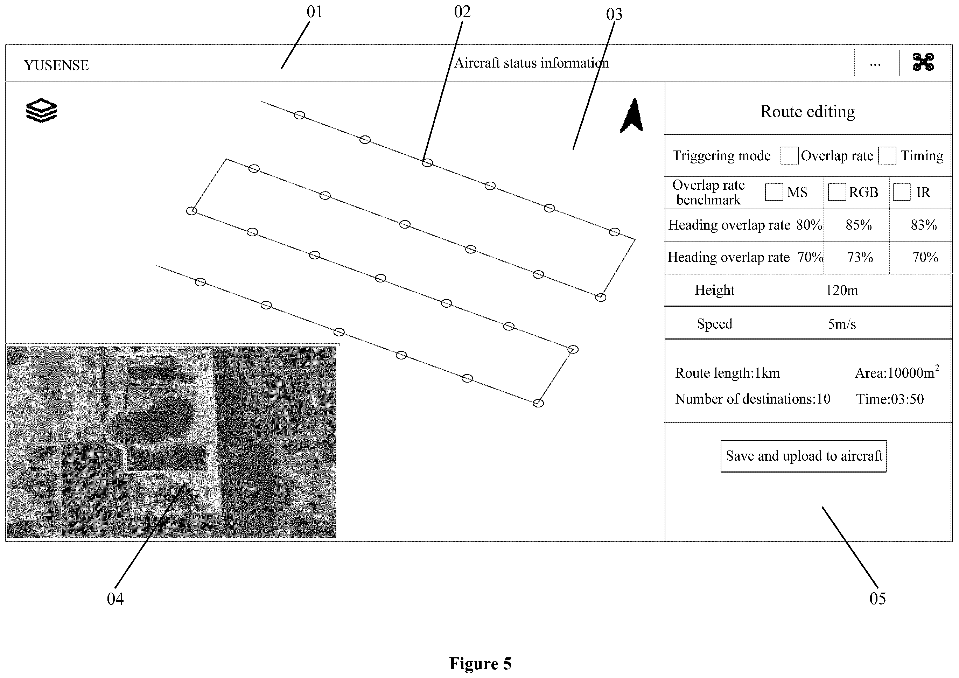

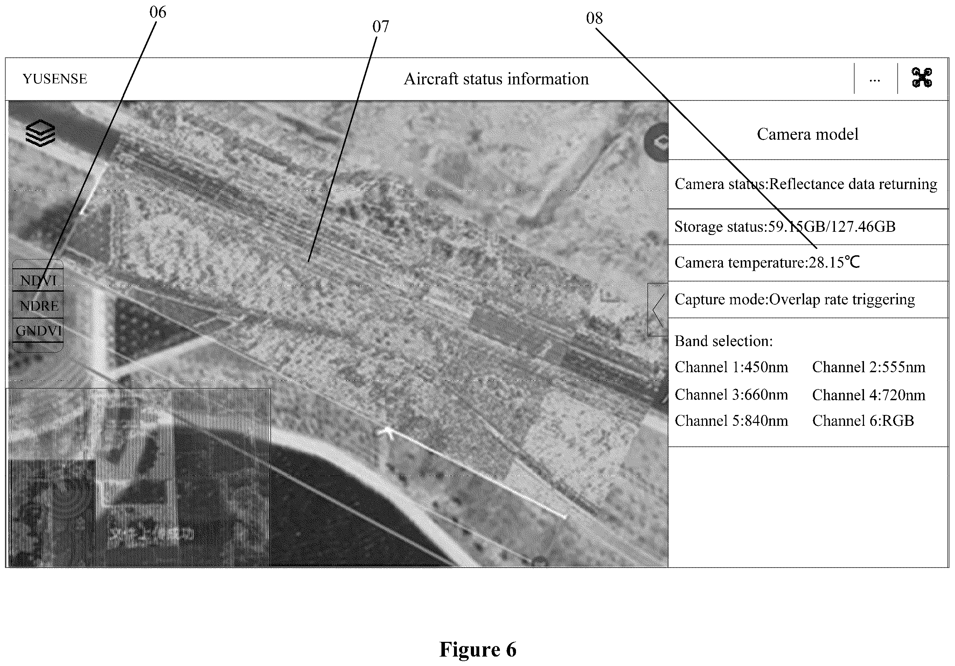

Figure 5 shows a route planning interface displayed on a ground station APP. In Figure 5, 01 represents an aircraft status bar, 02 represents route editing, 03 represents an offline map, 04 represents a video display window (which may display an index video, an RGB video, or a thermal infrared video), and 05 represents a parameter setting window. Figure 6 shows a route task interface displayed on a ground station APP. In Figure 6, 06 represents options of the types of the vegetation index, 07 represents a rapid splicing layer, and 08 represents a camera status bar.

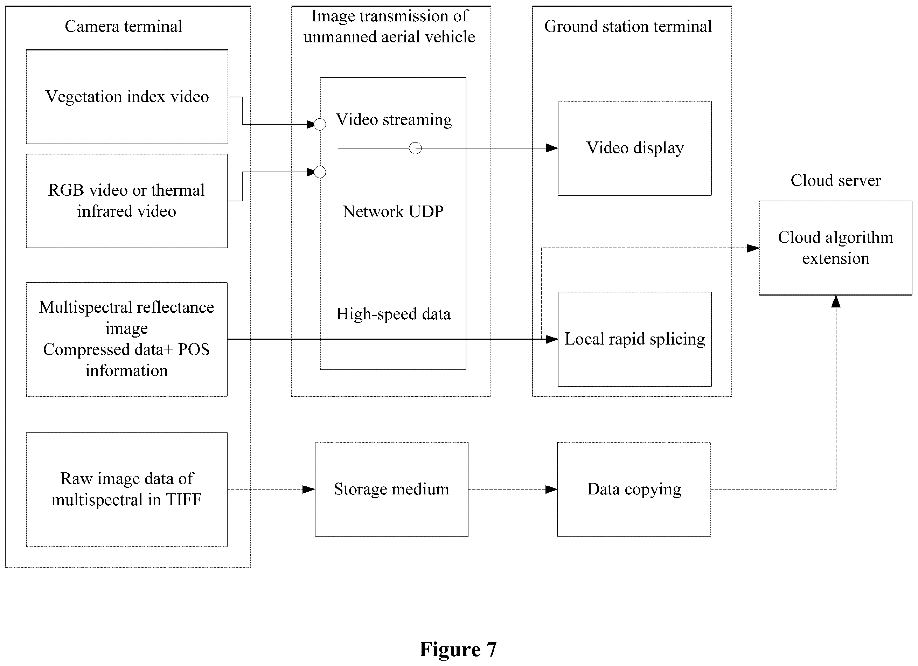

In practice, as shown in Figure 7, a camera terminal may output a selected vegetation index video (such as NDVI, GNDVI, or NDRE) based on the software instruction configuration of the ground station. The camera terminal may output an RGB video or a thermal infrared video through an RGB channel or a thermal infrared channel based on the software instruction configuration of the ground station. The camera terminal may output compressed multispectral reflectance image data (such as, in a JPEG format) and add POS position and posture information in Tag based on the software instruction configuration of the ground station. The camera terminal may output the raw DN value data (such as, in a TIFF format) of the images of the multiple spectral channels or data (such as, in a RAW format or a JPEG format) of other expansion channel based on the software instruction configuration of the ground station. The camera terminal may store raw data on a camera storage medium. The compressed video in the H.264 format generated in step 101 or step 102 is transmitted based on the UDP protocol and via the 100 Mbps network port by using the image transmission link of the unmanned aerial vehicle. The compressed multispectral reflectance image data and the POS position and posture information generated in step 200 are transmitted based on the UDP protocol via the 100 Mbps network port by using the image transmission link of the unmanned aerial vehicle. The ground station APP visually displays a video stream pushed in step 103 in the display window. The ground station APP, in an offline state without a mobile network, may solve the real-time returned POS position and posture information, perform local splicing and index calculation on the reflectance image, and generate multiple image layers. The ground station APP, in an online state with a mobile network, may upload the local cached reflectance image and POS position and posture information to the cloud server for data backup and complex extension algorithm processing. The ground station APP may copy the raw data to the cloud server via a network port of a PC.

According to the present disclosure, real-time display and the online splicing on the software of the ground station may be achieved by optimizing the data format, meeting the requirements of the downlink bandwidth of the image transmission link and the data transmission link. In this way, the multispectral vegetation index video, the RGB video or the thermal infrared video may be pushed in real time, the compressed multispectral reflectance image and the POS position and posture information may be online returned, avoiding a process of copying a large amount of data, which may be used with or without mobile network. In a case that the integrated system is connected to a mobile network, local cached image data may be backed up to the cloud or may be processed with a deep algorithm. Therefore, the integrated system is suitable for an application scenario that require high real-time and do not rely on a network condition.

Based on the same inventive concept, an operation method for an integrated system for acquiring and processing multispectral remote sensing data of an unmanned aerial vehicle is further provided according to an embodiment of the present disclosure. Since the principle of solving the problem in the method is similar to the foregoing integrated system for acquiring and processing multispectral remote sensing data of an unmanned aerial vehicle, implementations of the method may be referred to the implementations of the integrated system for acquiring and processing multispectral remote sensing data of an unmanned aerial vehicle, and the similarities are not repeated herein.

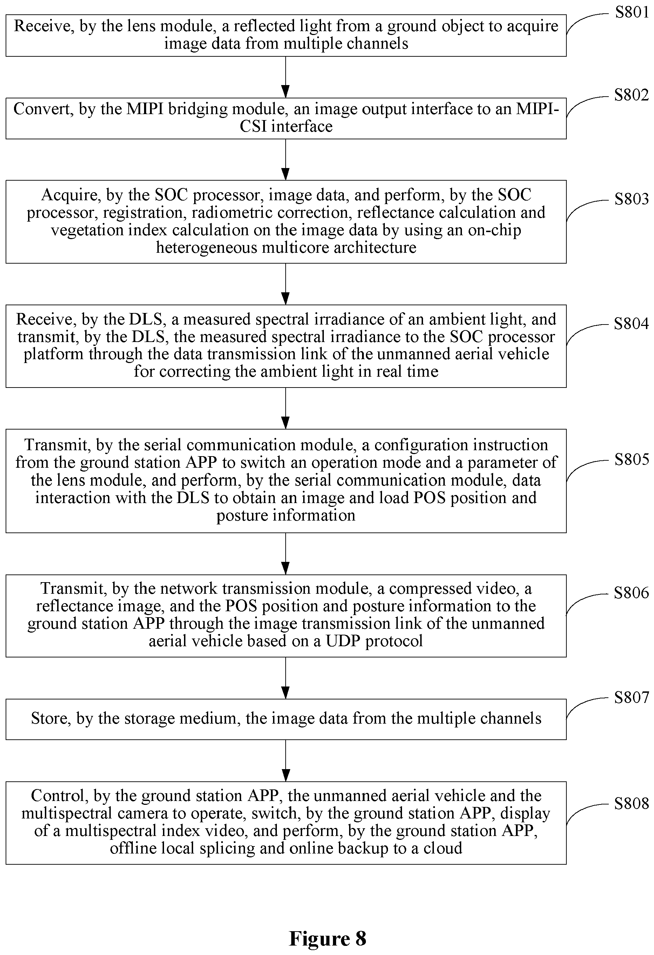

The operation method for an integrated system for acquiring and processing multispectral remote sensing data of an unmanned aerial vehicle according to the embodiment of the present disclosure, as shown in Figure 8, includes the following steps S801 to S808.

In step S801, a reflected light from a ground object is received by a lens module to acquire image data from multiple channels.

In step S802, an image output interface is converted to an MIPI-CSI interface by an MIPI bridging module.

In step S803, image data is acquired by an SOC processor platform, registration, radiometric correction, reflectance calculation and vegetation index calculation on the image data are performed by the SOC processor platform by using an on-chip heterogeneous multicore architecture.

In step S804, a measured spectral irradiance of an ambient light is received by a DLS, and the measured spectral irradiance is transmitted to the SOC processor platform by the DLS through the data transmission link of the unmanned aerial vehicle for correcting the ambient light in real time.

In step S805, a configuration instruction from a ground station APP is transmitted by a serial communication module to switch an operation mode and a parameter of the lens module, and data interaction with the DLS is performed by the serial communication module to obtain an image and load POS position and posture information.

In step S806, a compressed video, a reflectance image, and the POS position and posture information are transmitted by a network transmission module to the ground station APP through the image transmission link of the unmanned aerial vehicle based on a UDP protocol.

In step S807, the image data from the multiple channels is stored by a storage medium.

In step S808, the unmanned aerial vehicle and the multispectral camera are controlled by a ground station APP to operate, display of a multispectral index video is switched by the ground station APP, and offline local splicing and online backup to a cloud are performed by the ground station APP.

In the operation method for the integrated system for acquiring and processing multispectral remote sensing data of an unmanned aerial vehicle, the above steps are performed. Thus, acquisition, storage, registration, radiometric correction, reflectance calculation, vegetation index calculation, and transmission may be performed on the spectral image data in a flight mission of the unmanned aerial vehicle, avoiding copying a large amount of offline data, reducing the processing pressure of the ground station APP, realizing viewing a process video in real time, greatly improving the spectral remote sensing efficiency, and improving the user's operation experience. The present disclosure is suitable for various application scenarios such as multispectral remote sensing and detection of unmanned aerial vehicles. It should be noted that the order in which the steps S803 to S808 are performed is not limited herein.

In an embodiment, in the operation method for the integrated system acquiring and processing multispectral remote sensing data of an unmanned aerial vehicle according to the embodiment of the present disclosure, before the lens module receives reflected light from the ground object to acquire the image data from multiple channels in the step S801, the method further includes: identifying, by the SOC processor platform, an ID number of the lens module, automatically loading, by the SOC processor platform, a firmware corresponding to the bridging chip to the MIPI bridging module, and enabling, by the SOC processor platform, a power supply rail of an image sensor corresponding to the MIPI bridging module.

In an embodiment, in the operation method for the integrated system for acquiring and processing multispectral remote sensing data of an unmanned aerial vehicle according to the embodiment of the present disclosure, in the step S808, the ground station APP may perform offline local splicing and online backup to the cloud by: in a case that the ground station APP operates in an offline state without a mobile network, solving the POS position and posture information, performing local splicing and index calculation on the reflectance image, and generating a plurality of image layers; and in a case that the ground station APP operates an online state with a mobile network, uploading a local cached reflectance image and the POS position and posture information to a cloud server for data backup.

For a detail operating process of each of the above steps, reference may be made to the description of the above embodiments, which is not repeated herein.

The above embodiments of the present disclosure are described in a progressive manner. Each of the embodiments is mainly focused on describing its differences from other embodiments, and references may be made among these embodiments with respect to the same or similar parts. Since the method disclosed in the embodiments corresponds to the system disclosed in the embodiments, the description of the method is relatively simple, and for relevant matters, reference may be made to the description of the system.

Those skilled in the art further understand that units and algorithm steps described in combination with the disclosed embodiments may be implemented by electronic hardware, computer software or a combination thereof. In order to clearly describe interchangeability of hardware and software, steps and composition of each of the embodiments are generally described above based on functions. Whether these functions are performed in the hardware or the software depends on the specific application and design constraints for the technical solution. Those skilled in the art may use different methods to implement the described functions for each particular application, and such implementation should not be regarded as going beyond the scope of the present disclosure.

The steps of the method or algorithm described in conjunction with the embodiments disclosed herein may be directly implemented by hardware, a software module executed by a processor, or a combination thereof. The software module may reside in a random access memory (RAM), an internal memory, a read-only memory (ROM), an electrically programmable ROM, an electrically-erasable programmable ROM, a register, a hard disk, a removable disk drive, a CD-ROM, or any other storage medium known in the art.

In summary, an integrated system for acquiring and processing multispectral remote sensing data of an unmanned aerial vehicle is provided according to the present disclosure. The integrated system includes: a multispectral camera, an unmanned aerial vehicle, a DLS, and a ground station APP. The unmanned aerial vehicle is connected to the multispectral camera, and is arranged with an open image transmission link and an open data transmission link. The DLS and the ground station APP are connected to the unmanned aerial vehicle. The multispectral camera includes a lens module, an SOC processor platform, a serial communication module, a network transmission module and a storage medium. The SOC processor platform is connected to the lens module through an MIPI bridging module. Each of the serial communication module, the network transmission module and the storage medium is connected to an output terminal of the SOC processor platform. The lens module is configured to receive a reflected light from a ground object to acquire image data from multiple channels. The MIPI bridging module is configured to convert an image output interface to an MIPI-CSI interface. The SOC processor platform is configured to acquire image data, and perform registration, radiometric correction, reflectance calculation and vegetation index calculation on the image data by using an on-chip heterogeneous multicore architecture. The DLS is configured to receive a measured spectral irradiance of an ambient light, and transmit the measured spectral irradiance to the SOC processor platform through the data transmission link of the unmanned aerial vehicle for correcting the ambient light in real time. The serial communication module is configured to transmit a configuration instruction from the ground station APP for switching an operation mode and a parameter of the lens module, and perform data interaction with the DLS to obtain an image and load POS position and posture information. The network transmission module is configured to transmit a compressed video, a reflectance image, and the POS position and posture information to the ground station APP through the image transmission link of the unmanned aerial vehicle based on a UDP protocol. The storage medium is configured to store the image data from the multiple channels. The ground station APP is configured to control the unmanned aerial vehicle and the multispectral camera to operate, switch display of a multispectral index video, and perform offline local splicing and online backup to a cloud. According to the present disclosure, the hardware architecture of the multispectral camera is optimized, and a heterogeneous multi-core SOC processor platform is adopted, thereby collecting and processing spectral data in an integrated and online manner. Thus, acquisition, storage, registration, radiometric correction, reflectance calculation, vegetation index calculation, and transmission may be performed on the spectral image data in a flight mission of the unmanned aerial vehicle, avoiding copying a large amount of offline data, reducing the processing pressure of the ground station APP, realizing viewing a process video in real time, greatly improving the spectral remote sensing efficiency, and improving the user's operation experience. The present disclosure is suitable for various application scenarios such as multispectral remote sensing and detection of unmanned aerial vehicles. In addition, the operation method for the integrated system for acquiring and processing multispectral remote sensing data of an unmanned aerial vehicle is further provided according to the present disclosure, further improving the practicability of the integrated system. The method has the advantages of the integrated system.

Finally, it should be further noted that the relationship terms herein such as "first", "second" and the like are only used to distinguish one entity or operation from another entity or operation, rather than necessitate or imply that any such actual relationship or order exists between these entities or operations. Moreover, the terms "comprise", "include", or any other variants thereof are intended to encompass a non-exclusive inclusion, such that the process, method, article, or device including a series of elements includes not only those elements but also those elements that are not explicitly listed, or the elements that are inherent to such process, method, article, or device. Unless explicitly limited, the statement "including a ..." does not exclude the case that other similar elements may exist in the process, the method, the article or the device other than enumerated elements.

Hereinabove the integrated system and method for acquiring and processing multispectral remote sensing data on an unmanned aerial vehicle according to the present disclosure are described in detail. In this specification, principles and embodiments of the present disclosure are set forth by specific examples. Description of the embodiments is only intended to facilitate understanding of the method and core concepts of the present disclosure. Meanwhile, for those skilled in the art, various modifications can be made on the embodiments and applications based on the concept of the present disclosure. In conclusion, the content of the specification shall not be interpreted as a limitation to the present disclosure. Any modification, equivalent substitution, or improvement made within the spirit and the principle of the present disclosure shall fall within the protection scope of the claims of the present disclosure.

## Claims

1. An integrated system for acquiring and processing multispectral remote sensing data of an unmanned aerial vehicle, comprising: a multispectral camera, an unmanned aerial vehicle, a DLS, and a ground station APP; wherein
the unmanned aerial vehicle is connected to the multispectral camera, and is arranged with an open image transmission link and an open data transmission link;
the DLS and the ground station APP are connected to the unmanned aerial vehicle;
the multispectral camera comprises a lens module, an SOC processor platform, a serial communication module, a network transmission module and a storage medium, the SOC processor platform is connected to the lens module through an MIPI bridging module, and each of the serial communication module, the network transmission module and the storage medium is connected to an output terminal of the SOC processor platform;
the lens module is configured to receive a reflected light from a ground object to acquire image data from a plurality of channels;
the MIPI bridging module is configured to convert an image output interface to an MIPI-CSI interface;
the SOC processor platform is configured to acquire image data, and perform registration, radiometric correction, reflectance calculation and vegetation index calculation on the image data by using an on-chip heterogeneous multicore architecture;
the DLS is configured to receive a measured spectral irradiance of an ambient light, and transmit the measured spectral irradiance to the SOC processor platform through the data transmission link of the unmanned aerial vehicle for correcting the ambient light in real time;
the serial communication module is configured to transmit a configuration instruction from the ground station APP for switching an operation mode and a parameter of the lens module, and perform data interaction with the DLS to obtain an image and load POS position and posture information;
the network transmission module is configured to transmit a compressed video, a reflectance image, and the POS position and posture information to the ground station APP through the image transmission link of the unmanned aerial vehicle based on a UDP protocol;
the storage medium is configured to store the image data from the plurality of channels; and
the ground station APP is configured to control the unmanned aerial vehicle and the multispectral camera to operate, switch display of a multispectral index video, and perform offline local splicing and online backup to a cloud.

2. The integrated system for acquiring and processing multispectral remote sensing data of an unmanned aerial vehicle according to claim 1, wherein
the lens module comprises: a multispectral lens module, a thermal infrared lens module, an RGB lens module;
the multispectral lens module comprises: an optical lens with low distortion, a built-in narrowband filter for a band, and a panchromatic image sensor;
the thermal infrared lens module comprises: an optical lens with low distortion, a built-in narrowband filter for a band, and a thermal infrared image sensor; and
the RGB lens module comprises: an optical lens with low distortion, a built-in narrowband filter for a band, and an RGB image sensor.

3. The integrated system for acquiring and processing multispectral remote sensing data of an unmanned aerial vehicle according to claim 2, wherein
the MIPI bridging module comprises a power supply conversion circuit and a bridging chip; and
the SOC processor platform is further configured to: identify an ID number of the lens module, automatically load a firmware corresponding to the bridging chip to the MIPI bridging module, and enable a power supply rail of an image sensor corresponding to the MIPI bridging module.

4. The integrated system for acquiring and processing multispectral remote sensing data of an unmanned aerial vehicle according to claim 3, wherein the SOC processor platform comprises:
a GPU core, configured to perform registration on the image data in real time to register image spaces of spectral channels to a same benchmark;
a DSP core, configured to perform radiometric correction on the image data, compare the image data after radiometric correction with a standard reflectance pre-stored in a memory, convert the image data to a spectral radiance, and perform reflectance calculation to convert the spectral radiance to a ground reflectance, and then transmit the ground reflectance to a next level and perform on-chip vegetation index calculation;
an ARM core, configured to encode, compress, transmit and store the multispectral index video; and
an M7 core, configured to perform external triggering, state displaying, and IMU posture calculation.

5. The integrated system for acquiring and processing multispectral remote sensing data of an unmanned aerial vehicle according to claim 4, wherein the SOC processor platform is configured to trigger the plurality of channels synchronously based on a frame synchronization signal in a slave mode.

6. The integrated system for acquiring and processing multispectral remote sensing data of an unmanned aerial vehicle according to claim 5, wherein
the network transmission module comprises: a network transmission video module and a network transmission data module;
the network transmission video module is configured to transmit, based on the UDP protocol and via a 100-Mbps network port, a compressed video obtained by performing index calculation through the image transmission link of the unmanned aerial vehicle; and
the network transmission data module is configured to transmit, based on the UDP protocol and via the 100-Mbps network port, compressed multispectral reflectance image data and the POS position and posture information through the image transmission link of the unmanned aerial vehicle.

7. The integrated system for acquiring and processing multispectral remote sensing data of an unmanned aerial vehicle according to claim 6, wherein the ground station APP is configured to:
in a case that the ground station APP operates in an offline state without a mobile network, solve the POS position and posture information, perform local splicing and index calculation on the reflectance image, and generate a plurality of image layers; and
in a case that the ground station APP operates an online state with a mobile network, upload a local cached reflectance image and the POS position and posture information to a cloud server for data backup.

8. An operation method for the integrated system for acquiring and processing multispectral remote sensing data of an unmanned aerial vehicle according to any one of claims 1 to 7, comprising:
receiving, by the lens module, a reflected light from a ground object to acquire image data from a plurality of channels;
converting, by the MIPI bridging module, an image output interface to an MIPI-CSI interface;
acquiring, by the SOC processor, image data, and performing, by the SOC processor, registration, radiometric correction, reflectance calculation and vegetation index calculation on the image data by using an on-chip heterogeneous multicore architecture;
receiving, by the DLS, a measured spectral irradiance of an ambient light, and transmitting, by the DLS, the measured spectral irradiance to the SOC processor platform through the data transmission link of the unmanned aerial vehicle for correcting the ambient light in real time;
transmitting, by the serial communication module, a configuration instruction from the ground station APP to switch an operation mode and a parameter of the lens module, and performing, by the serial communication module, data interaction with the DLS to obtain an image and load POS position and posture information;
transmitting, by the network transmission module, a compressed video, a reflectance image, and the POS position and posture information to the ground station APP through the image transmission link of the unmanned aerial vehicle based on a UDP protocol;
storing, by the storage medium, the image data from the plurality of channels; and
controlling, by the ground station APP, the unmanned aerial vehicle and the multispectral camera to operate, switching, by the ground station APP, display of a multispectral index video, and performing, by the ground station APP, offline local splicing and online backup to a cloud.

9. The operation method for the integrated system for acquiring and processing multispectral remote sensing data of an unmanned aerial vehicle according to claim 8, wherein before receiving, by the lens module, the reflected light from the ground object to acquire the image data from the plurality of channels, the method further comprises:
identifying, by the SOC processor platform, an ID number of the lens module, automatically loading, by the SOC processor platform, a firmware corresponding to the bridging chip to the MIPI bridging module, and enabling, by the SOC processor platform, a power supply rail of an image sensor corresponding to the MIPI bridging module.

10. The operation method for the integrated system for acquiring and processing multispectral remote sensing data of an unmanned aerial vehicle according to claim 9, wherein the performing, by the ground station APP, offline local splicing and online backup to a cloud comprises:
in a case that the ground station APP operates in an offline state without a mobile network, solving the POS position and posture information, performing local splicing and index calculation on the reflectance image, and generating a plurality of image layers; and
uploading, in a case that the ground station APP operates an online state with a mobile network, a local cached reflectance image and the POS position and posture information to a cloud server for data backup.
